# EUROPEAN PATENT APPLICATION

(11) **EP 4 693 989 A1**
(43) Date of publication of application: **11.02.2026**
(21) Application number: 23931412.3
(22) Date of filing: 06.04.2023
(51) Int. Cl.: H04L 5/00, H04W 64/00

(54) **INFORMATION INDICATION METHODS, APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2023/086684
(87) International publication number: WO 2024/207343

(57) **Abstract**

Provided in the embodiments of the present disclosure are information indication methods. One method is executed by a terminal, and the method comprises: sending first information to a network device, the first information being used for indicating at least one of the following: at least one first carrier combination supported by the terminal, the first carrier combination being used for transmitting a first reference signal with the purpose of positioning; and a first quantity supported by the terminal, the first quantity being the maximum quantity of simultaneously configured first carrier combinations. Compared with modes of not using terminals to send first information to network devices, the present disclosure improves the positioning mechanism of a carrier-aggregation-based positioning method, thereby improving the reliability of the positioning mechanism.

## Description

### TECHNICAL FIELD

The disclosure relates to, but is not limited to, the field of wireless communication technology, and in particular to a method and an apparatus for indicating information, and a storage medium.

### BACKGROUND

**In** wireless communication technologies, a positioning reference signal (PRS) for positioning measurement is introduced for downlink, and a sounding reference signal (SRS) for positioning measurement is introduced for uplink. In a scenario, each PRS occupies one positioning frequency layer (PFL) or one component carrier (CC). However, occupying one frequency layer or one CC may not allow the positioning result to achieve sufficient positioning accuracy. To improve the accuracy, the transmission of reference signals for positioning under carrier aggregation (CA) may be introduced.

### SUMMARY

Embodiments of the disclosure provide methods and apparatuses for indicating information, and a storage medium.

According to a first aspect of embodiments of the disclosure, a method for indicating information is provided. The method is performed by a terminal, including: sending first information to a network device; in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

**In** an embodiment, the first reference signal includes at least one of: a positioning reference signal (PRS); or a sounding reference signal (SRS).

**In** an embodiment, the first information includes the first carrier combination corresponding to the PRS and/or the first number corresponding to the PRS, or the first information includes the first carrier combination corresponding to the SRS and/or the first number corresponding to the SRS.

In an embodiment, the method further includes: sending second information to the network device, in which the second information includes the first information.

In an embodiment, the second information is configured to indicate at least one of: at least one second carrier combination supported by the terminal, the second carrier combination being used for communication transmission; or a second number supported by the terminal, the second number being a maximum number of the second carrier combinations that are configured simultaneously; and in which the first carrier combination is the same as the second carrier combination, and/or the first number is the same as the second number.

In an embodiment, carriers included in the first carrier combination are intra-band contiguous carriers.

In an embodiment, information about a carrier combination included in the first information includes at least one of: information for indicating intra-band contiguous carriers supporting carrier aggregation (CA); a maximum number of component carriers (CCs) supporting the CA of the terminal; at least one bandwidth combination set supported by the terminal, in which bandwidths on at least one CC corresponding to different bandwidth combination sets are different; or power class (PC) information.

In an embodiment, the network device includes an access network device and/or a core network device.

According to a second aspect of embodiments of the disclosure, a method for indicating information is provided. The method is performed by a network device, including: receiving first information sent by a terminal; in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

In an embodiment, the first reference signal includes at least one of: a PRS; or an SRS.

In an embodiment, the first information includes the first carrier combination corresponding to the PRS and/or the first number corresponding to the PRS, or the first information includes the first carrier combination corresponding to the SRS and/or the first number corresponding to the SRS.

In an embodiment, the method further includes: receiving second information sent by the terminal, in which the second information includes the first information.

In an embodiment, the second information is configured to indicate at least one of: at least one second carrier combination supported by the terminal, the second carrier combination being used for communication transmission; or a second number supported by the terminal, the second number being a maximum number of the second carrier combinations that are configured simultaneously; in which the first carrier combination is the same as the second carrier combination, and/or the first number is the same as the second number.

In an embodiment, carriers included in the first carrier combination are intra-band contiguous carriers.

In an embodiment, information about a carrier combination included in the first information includes at least one of: information for indicating intra-band contiguous carriers supporting CA; a maximum number of CCs supporting the CA of the terminal; at least one bandwidth combination set supported by the terminal, in which bandwidths on at least one CC corresponding to different bandwidth combination sets are different; or PC information.

In an embodiment, the network device includes an access network device and/or a core network device.

According to a third aspect of embodiments of the disclosure, a terminal is provided. The terminal includes: a sending module, configured to send first information to a network device; in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

According to a fourth aspect of embodiments of the disclosure, a network device is provided. The network device includes: a receiving module, configured to receive first information sent by a terminal; in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

According to a fifth aspect of embodiments of the disclosure, a communication system is provided. The communication system includes: a terminal, configured to perform any of the methods performed by the terminal as described in the disclosure, and a network device, configured to perform any of the methods performed by the access network device as described in the disclosure.

According to a sixth aspect of embodiments of the disclosure, a communication device is provided. The communication device includes: a processor; a memory storing instructions executable by the processor; in which the processor is configured to execute the executable instructions to implement the method of any embodiments of the disclosure.

According to a seventh aspect of embodiments of the disclosure, a computer storage medium is provided. The computer storage medium stores a computer-executable program which, when executed by a processor, enable the method of any embodiments of the disclosure to be implemented.

In an embodiment of the disclosure, the first information is sent to the network device; in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. In this case, since the first information sent by the terminal to the network device indicates the at least one first carrier combination supported by the terminal, the first carrier combination being used for transmitting a first reference signal for positioning, and/or the first number supported by the terminal, the first number being the maximum number of the first carrier combinations that are configured simultaneously, thus the network device may transmit the first reference signal based on the at least one first carrier combination and/or the maximum number of the first carrier combinations that are configured simultaneously supported by the terminal. Compared with a method that does not adopt the approach of the terminal sending the first information to the network device, this mechanism improves the positioning mechanism based on the positioning method based on the CA and enhances the reliability of the positioning mechanism.

### BRIEF DESCRIPTION OF THE DRAWINGS

FIG. 1 is a schematic diagram illustrating an architecture of a wireless communication system according to an example embodiment of the disclosure.
FIG. 2 is a flow chart illustrating a method for indicating information according to an example embodiment of the disclosure.
FIG. 3 is a flow chart illustrating a method for indicating information according to an example embodiment of the disclosure.
FIG. 4 is a flow chart illustrating a method for indicating information according to an example embodiment of the disclosure.
FIG. 5 is a flow chart illustrating a method for indicating information according to an example embodiment of the disclosure.
FIG. 6 is a flow chart illustrating a method for indicating information according to an example embodiment of the disclosure.
FIG. 7 is a flow chart illustrating a method for indicating information according to an example embodiment of the disclosure.
FIG. 8 is a flow chart illustrating a method for indicating information according to an example embodiment of the disclosure.
FIG. 9 is a flow chart illustrating a method for indicating information according to an example embodiment of the disclosure.
FIG. 10 is a block diagram illustrating an information terminal according to an example embodiment of the disclosure.
FIG. 11 is a block diagram illustrating an information network device according to an example embodiment of the disclosure.
FIG. 12 is a block diagram illustrating a terminal according to an example embodiment of the disclosure.
FIG. 13 is a block diagram illustrating a base station according to an example embodiment of the disclosure.

### DETAILED DESCRIPTION

Reference will now be made in detail to the example embodiments, examples of which are illustrated in the accompanying figures. When the following description refers to the accompanying figures, the same numerals in different figures refer to the same or similar elements unless otherwise indicated. The implementations described in the following example embodiments do not represent all implementations consistent with the embodiments of the disclosure. Rather, they are merely examples of devices and methods consistent with some aspects of the embodiments of the disclosure.

Terms used in the embodiments of the disclosure are for the purpose of describing specific embodiments only, and are not intended to limit the embodiments of the disclosure. As used in the disclosure and the claims, the singular forms "a/an", "said" and "the" are also intended to include the plural forms unless the context clearly dictates otherwise. It should also be understood that the term "and/or" as used herein refers to and includes any and all possible combinations of one or more of the associated listed items.

It should be understood that although the embodiments of the disclosure may use the terms first, second, third, etc. to describe various information, the information should not be limited to these terms. These terms are only used to distinguish information of the same type from one another. For example, without departing from the scope of the embodiments of the disclosure, first information may also be called second information, and similarly, second information may also be called first information. Depending on the context, the word "if" as used herein may be interpreted as "in a case that" or "when" or "in response to a determination".

For the purposes of brevity and ease of understanding, the terms "greater than" or "less than" , "higher than" or "lower than" are used herein to characterize size relationships. For those skilled in the field, it is understood that the term "greater than" also covers the meaning of "greater than or equal to", the term "less than" also covers the meaning of "less than or equal to".

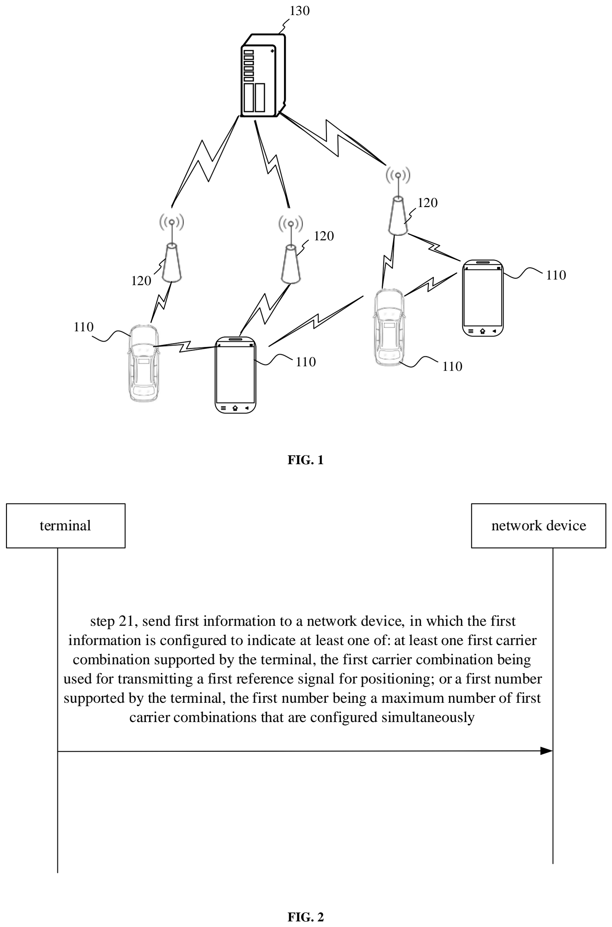

Referring to FIG. 1, which is a schematic diagram illustrating an architecture of a wireless communication system according to an embodiment of the disclosure. As shown in FIG. 1, the wireless communication system is a communication system based on mobile communication technology, and may include a plurality of user equipments (UEs) 110 and a plurality of base stations 120.

The UE 110 may be devices that provide voice and/or data connectivity to the user. The UE 110 may communicate with one or more core networks via a radio access network (RAN), and the UE 110 may be internet of things (IoT) terminals, such as sensor devices, mobile telephones (also known as a "cellular" phone), and computers with IoT terminals, which may be for example, stationary, portable, pocket-size, hand-held, computer-built, or vehicle-mounted device. For example, the UE 110 may be a station (STA), a subscriber unit, a subscriber station, a mobile station, a mobile, a remote station, an access point, a remote terminal, an access terminal, a user terminal, a user agent, a user device, or user equipment. Alternatively, the UE 110 may also be an unmanned aerial vehicle (UAV) device. Alternatively, the UE 110 may be an in-vehicle device, which for example, may be an electronic control unit (ECU) with wireless communication capabilities, or a wireless communication device that is connected to an external ECU. Alternatively, the UE 110 may be a roadside device, e.g., may be a street light, a signal light, or other roadside device, etc., with wireless communication capabilities.

The base stations 120 may be a network side device in a wireless communication system. The wireless communication system may be a 4th generation mobile communication (4G) system, also known as a long term evolution (LTE) system; or the wireless communication system may also be a 5th generation mobile communication (5G) system, also known as a new radio (NR) system or a 5G NR system. Alternatively, the wireless communication system may be a further next-generation system of the 5G system. The access network in the 5G system may be referred to as a new generation-radio access network (NG-RAN).

The base stations 120 may be an evolved base station (eNB) employed in the 4G system. Alternatively, the base stations 120 may be a base station (gNB) using a centralized-distributed architecture in a 5G system. The base stations 120, when adopting the centralized-distributed architecture, typically includes a central unit (CU) and at least two distributed units (DUs). The central unit is provided with protocol stacks for a packet data convergence protocol (PDCP) layer, a radio link control (RLC) layer, and a media access control (MAC) layer; the distributed unit is provided with protocol stacks for a physical (PHY) layer. The specific implementation of the base stations 120 is not limited in the embodiments of the disclosure.

A wireless connection may be established between the base stations 120 and the UE 110 through a radio interface. In various embodiments, the radio interface is a radio interface based on the 4G standard; or the radio interface is a radio interface based on a 5G standard. For example, the radio interface is an NR interface; or the radio interface may be a radio interface based on a further next-generation mobile communication standard based on the 5G.

**In** some embodiments, an E2E (end to end) connection, for example, a V2V (vehicle to vehicle) communication, a V2I (vehicle to infrastructure) communication, and a V2P (vehicle to pedestrian) communication and other scenarios in vehicle to everything (V2X) communication, may also be established between the UEs 110.

In this case, the UE may be considered to be the terminal in the following embodiments.

In some embodiments, the wireless communication system described above may also include a network management device 130.

Several base stations 120 are respectively connected to the network management device 130. The network management device 130 may be a core network device in the wireless communication system. For example, the network management device 130 may be a mobility management entity (MME) in an evolved packet core (EPC). Alternatively, the network device may also be a location management function network element. For example, the location management function network element includes a location server. The location server may be implemented as any one of the following: a location management function (LMF), an enhanced serving mobile location centre (E-SMLC), a secure user plane location (SUPL), or an SUPL location platform (SLP). Alternatively, the network management device may also be other core network devices, such as a serving gateway (SGW), a public data network gateway (PGW), a policy and charging rules function (PCRF), or a home subscriber server (HSS), etc. Embodiments of the disclosure do not define the implementation form of the network management device 130.

In order to facilitate the understanding of those skilled in the art, embodiments of the disclosure enumerate a plurality of implementations to provide a clear illustration for the technical solutions of embodiments of the disclosure. Those skilled in the art may understand that the plurality of embodiments provided in the embodiments of the disclosure may be performed individually, may be performed together with the methods of other embodiments in the embodiments of the disclosure in combination, or may be performed individually or in combination with a number of methods in other related art. The embodiments of the disclosure do not limit this.

To better understand embodiments of the disclosure, the application scenarios in wireless communication are described below.

In an embodiment, reference signals for positioning include a positioning reference signal (PRS) and a sounding reference signal (SRS), and only support aggregation of intra-band contiguous carriers, with a maximum number of carriers being 3. How the network device obtains which carriers the terminal supports for aggregation to transmit reference signals for positioning is a problem that needs to be solved.

In an embodiment, by proposing the carrier aggregation (CA) condition, when transmitting reference signals for positioning under the CA, the terminal needs to report the supported carrier combinations used for the CA to transmit reference signals for positioning, thereby improving the feasibility of the CA-based positioning.

As illustrated in FIG. 2, a method for indicating information according to an embodiment of the disclosure is performed by a terminal. The method includes the following.

At step 21, first information is sent to a network device, in which the first information is configured to indicate at least one of: at least one first carrier combination supported by the terminal, the first carrier combination is used for transmitting a first reference signal for positioning; or a first number supported by the terminal, the first number is a maximum number of first carrier combinations that are configured simultaneously.

In this case, the terminal involved in the disclosure may be, but is not limited to, a mobile phone, a wearable device, a vehicle-mounted terminal, a road side unit (RSU), a smart home terminal, an industrial sensor device, and/or a medical device. In some embodiments, the terminal may be a RedCap terminal or a NR terminal of a predetermined release (for example, an release 17 (R17) NR terminal).

The network device involved in the disclosure may also be an access network device or a core network device. The access network device may be a base station. The core network device may be a first network function, and the first network function may be a location management function network element. For example, the location management function network element includes a location server. The location server may be implemented as any one of the following: an LMF, an E-SMLC, an SUPL, or an SLP.

In some embodiments, a plurality of carriers within the first carrier combination are used for the carrier aggregation (CA) to send reference signals for positioning. Identifiers of reference signal resources used for the CA to send the reference signals for positioning on the plurality of carriers may be the same or different, but time domain location of each reference signal resource must be the same. Further, for reference signals on the plurality of reference signal resources at the same time domain location on the plurality of carriers within the first carrier combination based on the CA, the terminal only needs to obtain one measurement value for the same time parameter. For example, the time parameter may be a reference signal time difference (RSTD), or may be a reception-transmission (Rx-Tx) time difference.

In an embodiment, the first information is sent to the network device, in which the first information is configured to indicate at least one of: the at least one first carrier combination supported by the terminal, the first carrier combination being used for transmitting a PRS for positioning; or a first number supported by the terminal, the first number being the maximum number of the first carrier combinations that are configured simultaneously.

In an embodiment, the first information is sent to the network device, in which the first information is configured to indicate at least one of: the at least one first carrier combination supported by the terminal, the first carrier combination being used for transmitting an SRS for positioning; or a first number supported by the terminal, the first number being the maximum number of the first carrier combinations that are configured simultaneously.

In an embodiment, the first information is sent to the network device, in which the first information is configured to indicate at least one of: the at least one first carrier combination supported by the terminal, the first carrier combination being used for transmitting the first reference signal for positioning; or a first number supported by the terminal, the first number being the maximum number of the first carrier combinations that are configured simultaneously. The first reference signal includes the PRS and the SRS.

In an embodiment, the first carrier combination includes a carrier combination A and a carrier combination B, and the first number includes a number A and a number B. The first information is sent to the network device, in which the first information is configured to indicate at least one of: at least one carrier combination A supported by the terminal, the carrier combination A being used for transmitting a PRS for positioning; at least one carrier combination B supported by the terminal, the carrier combination B being used for transmitting a PRS for positioning; a number A supported by the terminal, the number A being a maximum number of the carrier combinations A that are configured simultaneously; or a number B supported by the terminal, the number B being a maximum number of the carrier combinations B that are configured simultaneously.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes at least one of the PRS or the SRS.

In an embodiment, the first information is sent to the network device, the first information including the first carrier combination corresponding to the PRS and/or the first number corresponding to the PRS, or the first information including the first carrier combination corresponding to the SRS and/or the first number corresponding to the SRS.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes the PRS and the SRS. The first carrier combination corresponding to the PRS and/or the first number corresponding to the PRS, and the first carrier combination corresponding to the SRS and/or the first number corresponding to the SRS, are sent to the network device separately via the first information.

In an embodiment, the first information is sent to the network device, in which the first information is configured to indicate at least one of: the at least one first carrier combination supported by the terminal, the first carrier combination being used for transmitting a PRS for positioning; or the first number supported by the terminal, the first number being the maximum number of the first carrier combinations that are configured simultaneously. The first information is sent to the network device, in which the first information is configured to indicate at least one of: the at least one first carrier combination supported by the terminal, the first carrier combination being used for transmitting an SRS for positioning; or the first number supported by the terminal, the first number being the maximum number of the first carrier combinations that are configured simultaneously.

In an embodiment, second information is sent to the network device, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously.

In an embodiment, the second information is sent to the network device, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

**In** an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first information is included in the second information sent by the terminal to the network device. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number. It may be understood that in the embodiments, the terminal only needs to send the second information where the first information is included, i.e., the carrier combination for positioning is the same as the carrier combination for communication transmission.

In an embodiment, the second information is sent to the network device, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number. It may be understood that in the embodiments, the terminal only needs to send the second information, and the first information is included in the second information, i.e., the carrier combination for positioning is the same as the carrier combination for communication transmission.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is sent to the network device; in which the second information is configured to indicate at least one of: at least one second carrier combination supported by the terminal, the second carrier combination being used for communication transmission; or a second number supported by the terminal, the second number being a maximum number of the second carrier combinations that are configured simultaneously. It may be understood that in the embodiments of the disclosure, the terminal needs to send the first information and the second information. Correspondingly, the first carrier combination and the second carrier combination may be the same or different. The first number and the second number may be the same or different.

In an embodiment, the communication transmission may include at least one of: physical downlink control channel (PDCCH) transmission; physical downlink shared channel (PDSCH) transmission; physical uplink control channel (PUCCH) transmission; physical uplink shared channel (PUSCH) transmission; demodulation reference signal (DMRS) transmission; physical random access channel (PRACH) transmission; physical broadcast channel (PBCH) transmission; channel state information-reference signal (CSI-RS) transmission; non-positioning SRS transmission; non-positioning tracking reference signals (TRS) transmission; non-positioning phase-tracking reference signals (PTRS) transmission; or transmission of various channels or reference signals included in sidelink (SL) communication.

In an embodiment, carriers included in the first carrier combination are intra-band contiguous carriers.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. Carrier combination-related information included in the first information includes at least one of: information for indicating intra-band contiguous carriers supporting the CA; a maximum number of component carriers (CCs) on which the terminal supports the CA; at least one bandwidth combination set supported by the terminal, in which bandwidths on at least one CC corresponding to different bandwidth combination sets are different; or power class (PC) information.

For example, the information for indicating the intra-band contiguous carriers supporting the CA may be combination information (BandCombination), which may be indicated by FreqBandIndicator, to indicate the intra-band contiguous carriers within which frequency band for performing the CA.

For example, the maximum number of CCs on which the terminal supports the CA may be indicated by CA-BandwidthClassNR. For example, the indicated maximum number is 3 or 2.

For example, different bandwidth combination sets correspond to different bandwidths of different CCs. For example, the terminal may indicate supported bandwidth combination set(s), may indicate support for one or more sets, and the bandwidths of different CCs corresponding to different sets are different. For example, bandwidths of CC1 and CC2 corresponding to set 0 is {20, 80} or {50, 50}; the bandwidth of CC1 corresponding to set 1 may be selected from {10, 15, 20, 30, 40, 50, 60, 80}, and the bandwidth of CC2 corresponding to set 1 may also be selected from {10, 15, 20, 30, 40, 50, 60, 80}, i.e., any combination is supported.

For example, the power class information may include at least one of: PC1 (for example, 31 dBm), PC1.5 (for example, 29 dBm), PC2 (for example, 26 dBm), PC3 (for example, 23 dBm), PC4 (to be determined), or PC5 (for example, 20 dBm).

In the embodiments of the disclosure, the first information is sent to the network device; in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. In this case, since the first information sent by the terminal to the network device indicates the at least one terminal-supported first carrier combination used for transmitting a first reference signal for positioning, and/or the terminal-supported maximum number of the first carrier combinations that are configured simultaneously, the network device may transmit the first reference signal based on the at least one first carrier combination and/or the maximum number of the first carrier combinations that are configured simultaneously supported by the terminal. Compared with a method that does not adopt the approach of sending the first information by the terminal to the network device, this improves the positioning mechanism based on the positioning method based on the CA and enhances the reliability of the positioning mechanism.

It needs to be noted that those skilled in the art may understand that the methods according to embodiments of the disclosure may be performed separately or in combination with some of the methods in embodiments of the disclosure or some of the methods in the related art.

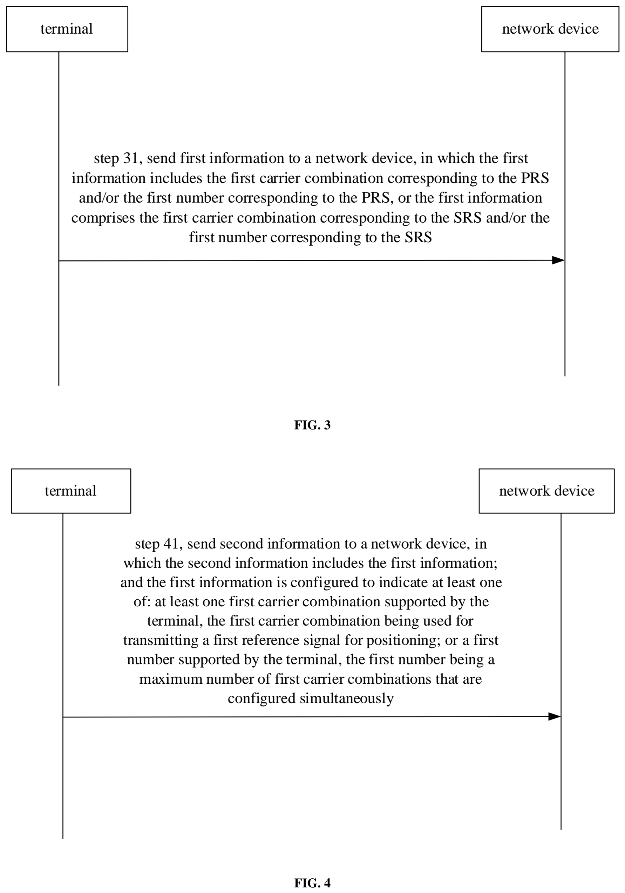

As illustrated in FIG. 3, a method for indicating information according to the embodiments of the disclosure is performed by a terminal. The method includes the following.

At step 31: first information is sent to a network device, in which the first information includes the first carrier combination corresponding to the PRS and/or the first number corresponding to the PRS, or the first information includes the first carrier combination corresponding to the SRS and/or the first number corresponding to the SRS.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes the PRS and the SRS. The first carrier combination corresponding to the PRS and/or the first number corresponding to the PRS, and the first carrier combination corresponding to the SRS and/or the first number corresponding to the SRS, are sent to the network device separately via the first information.

In an embodiment, the first information is sent to the network device, in which the first information is configured to indicate: the at least one first carrier combination supported by the terminal, the first carrier combination being used for transmitting a PRS for positioning. The first information is sent to the network device, in which the first information is configured to indicate at least one of: the at least one first carrier combination supported by the terminal, the first carrier combination being used for transmitting an SRS for positioning.

In an embodiment, the first information is sent to the network device, in which the first information is configured to indicate: the at least one first carrier combination supported by the terminal, the first carrier combination being used for transmitting a PRS for positioning; or the first number supported by the terminal, the first number being the maximum number of the first carrier combinations that are configured simultaneously. The first information is sent to the network device, in which the first information is configured to indicate: the at least one first carrier combination supported by the terminal, the first carrier combination being used for transmitting an SRS for positioning; or the first number supported by the terminal, the first number being the maximum number of the first carrier combinations that are configured simultaneously.

It may be understood that in the above embodiments, the terminal sends the first information twice.

**It** needs to be noted that those skilled in the art may understand that the methods provided in embodiments of the disclosure may be performed separately or in combination with some of the methods in embodiments of the disclosure or some of the methods in the related art.

As illustrated in FIG. 4, a method for indicating information according to the embodiments of the disclosure is performed by a terminal. The method includes the following.

At step 41: second information is sent to a network device, in which the second information includes the first information; and the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

**In** an embodiment, the second information is sent to the network device, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

**In** an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first information is included in the second information sent by the terminal to the network device. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, the second information is sent to the network device, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, carriers included in the first carrier combination are intra-band contiguous carriers. If the second information includes the first information, the second carrier combination also needs to include at least one carrier combination that are intra-band contiguous carriers.

It needs to be noted that those skilled in the art may understand that the methods provided in embodiments of the disclosure may be performed separately or in combination with some of the methods in embodiments of the disclosure or some of the methods in the related art.

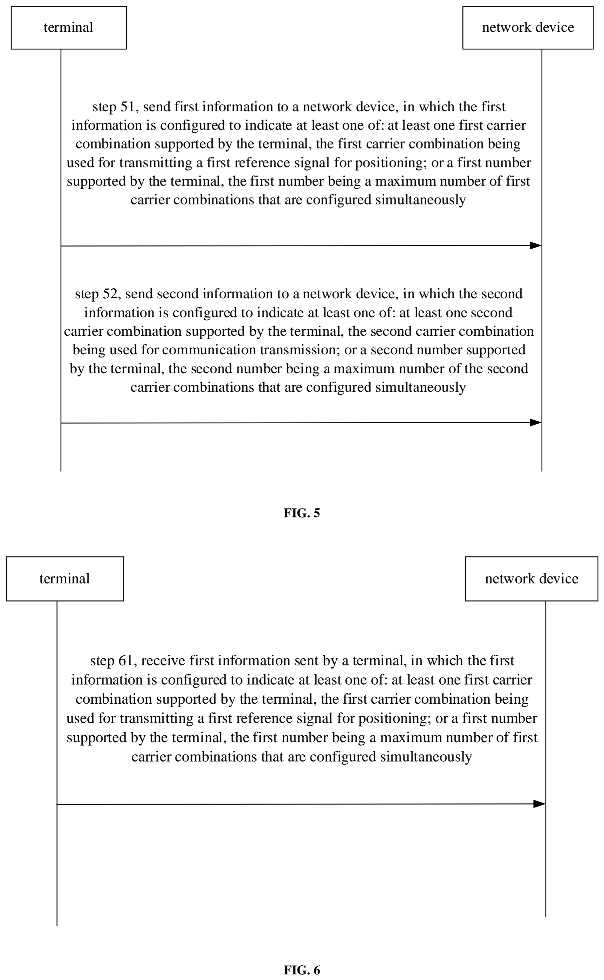

As illustrated in FIG. 5, a method for indicating information according to an embodiment of the disclosure is performed by a terminal. The method includes the following.

At step 51: first information is sent to a network device, in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

At step 52: second information is sent to a network device, in which the second information is configured to indicate at least one of: at least one second carrier combination supported by the terminal, the second carrier combination being used for communication transmission; or a second number supported by the terminal, the second number being a maximum number of the second carrier combinations that are configured simultaneously.

In an embodiment, the first information is sent to the network device, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is sent to the network device; in which the second information is configured to indicate at least one of: at least one second carrier combination supported by the terminal, the second carrier combination being used for communication transmission; or a second number supported by the terminal, the second number being a maximum number of the second carrier combinations that are configured simultaneously. It may be understood that in the embodiments of the disclosure, the terminal needs to send the first information and the second information. Correspondingly, the first carrier combination and the second carrier combination may be the same or different. The first number and the second number may be the same or different.

It needs to be noted that those skilled in the art may understand that the methods provided in embodiments of the disclosure may be performed separately or in combination with some of the methods in embodiments of the disclosure or some of the methods in the related art.

As illustrated in FIG. 6, a method for indicating information according to the embodiments of the disclosure is performed by a network device. The method includes the following.

At step 61: first information sent by a terminal is received, in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

In this case, the terminal mentioned in the disclosure may be, but is not limited to, a mobile phone, a wearable device, a vehicle-mounted unit, an RSU, a smart home terminal, an industrial sensor device, and/or a medical device. In some embodiments, the terminal may be a RedCap terminal or a NR terminal of a predetermined release (for example, an R17 NR terminal).

The network device mentioned in the disclosure may also be an access network device or a core network device. The access network device may be a base station. The core network device may be a first network function, and the first network function may be a location management function network element. For example, the location management function network element includes a location server. The location server may be implemented as any one of the following: an LMF, an E-SMLC, an SUPL, or an SLP.

In some embodiments, a plurality of carriers within the first carrier combination are used for CA to send reference signal(s) for positioning. Identifiers of reference signal resources used for the CA to send the reference signal(s) for positioning on the plurality of carriers may be the same or different, but the time domain location of each reference signal resource must be the same. Further, for reference signals on the plurality of reference signal resources at the same time domain location on the plurality of carriers within the first carrier combination based on the CA, the terminal only needs to obtain one measurement value for the same time parameter. For example, the time parameter may be an RSTD, or may be an Rx-Tx time difference. In an embodiment, the first information sent by the terminal is received, in which the first information is configured to indicate at least one of: the at least one first carrier combination supported by the terminal, the first carrier combination being used for transmitting a PRS for positioning; or the first number supported by the terminal, the first number being the maximum number of the first carrier combinations that are configured simultaneously.

In an embodiment, the first information sent by the terminal is received, in which the first information is configured to indicate at least one of: the at least one first carrier combination supported by the terminal, the first carrier combination being used for transmitting an SRS for positioning; or the first number supported by the terminal, the first number being the maximum number of the first carrier combinations that are configured simultaneously.

**In** an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes the PRS and the SRS.

In an embodiment, the first carrier combination includes a carrier combination A and a carrier combination B, and a first number includes a number A and a number B. The first information sent by the terminal is received, in which the first information is configured to indicate at least one of: at least one carrier combination A supported by the terminal, the carrier combination A being used for transmitting a PRS for positioning; at least one carrier combination B supported by the terminal, the carrier combination B being used for transmitting a PRS for positioning; a number A supported by the terminal, the number A being a maximum number of carrier combination A that are configured simultaneously; or a number B supported by the terminal, the number B being a maximum number of carrier combination B that are configured simultaneously.

**In** an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes at least one of the PRS or the SRS.

In an embodiment, the first information sent by the terminal is received, the first information including the first carrier combination corresponding to the PRS and/or the first number corresponding to the PRS, or the first information including the first carrier combination corresponding to the SRS and/or the first number corresponding to the SRS.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes the PRS and the SRS. The first carrier combination corresponding to the PRS and/or the first number corresponding to the PRS, and the first carrier combination corresponding to the SRS and/or the first number corresponding to the SRS, are sent to the network device separately via the first information.

In an embodiment, the first information sent by the terminal is received, in which the first information is configured to indicate at least one of: the at least one first carrier combination supported by the terminal, the first carrier combination being used for transmitting a PRS for positioning; or the first number supported by the terminal, the first number being the maximum number of the first carrier combinations that are configured simultaneously. The first information sent by the terminal is received, in which the first information is configured to indicate at least one of: the at least one first carrier combination supported by the terminal, the first carrier combination being used for transmitting an SRS for positioning; or the first number supported by the terminal, the first number being the maximum number of the first carrier combinations that are configured simultaneously.

In an embodiment, second information sent by the terminal is received, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously.

In an embodiment, the second information sent by the terminal is received, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first information is included in the second information sent by the terminal to the network device. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number. It may be understood that in the embodiments, the terminal only needs to send the second information where the first information is included, i.e., the carrier combination for positioning is the same as the carrier combination for communication transmission.

In an embodiment, the second information sent by the terminal is received, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information sent by the terminal is received; in which the second information is configured to indicate at least one of: at least one second carrier combination supported by the terminal, the second carrier combination being used for communication transmission; or a second number supported by the terminal, the second number being a maximum number of the second carrier combinations that are configured simultaneously. It may be understood that in the embodiments of the disclosure, the terminal needs to send the first information and the second information. Correspondingly, the first carrier combination and the second carrier combination may be the same or different. The first number and the second number may be the same or different.

**In** an embodiment, the communication transmission may include at least one of: PDCCH transmission; PDSCH transmission; PUCCH transmission; PUSCH transmission; DMRS transmission; PRACH transmission; PBCH transmission; CSI-RS transmission; non-positioning SRS transmission; non-positioning TRS transmission; non-positioning PTRS transmission; or transmission of various channels or reference signals included in SL communication.

In an embodiment, carriers included in the first carrier combination are intra-band contiguous carriers.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. Carrier combination-related information included in the first information includes at least one of: information for indicating intra-band contiguous carriers supporting the CA; a maximum number of CCs on which the terminal supports the CA; at least one bandwidth combination set supported by the terminal, in which bandwidths on at least one CC corresponding to different bandwidth combination sets are different; or PC information.

For example, the information for indicating the intra-band contiguous carriers supporting the CA may be combination information (BandCombination), which may be indicated by FreqBandIndicator, to indicate which intra-band contiguous carriers within which frequency band for performing the CA.

For example, the maximum number of CCs on which the terminal supports the CA may be indicated by CA-BandwidthClassNR. For example, the indicated maximum number is 3 or 2.

For example, different bandwidth combination sets correspond to different bandwidths of different CCs. For example, the terminal may indicate supported bandwidth combination set(s), may indicate support for one or more sets, and the bandwidths of different CCs corresponding to different sets are different. For example, bandwidths of CC1 and CC2 corresponding to set 0 is {20, 80} or {50, 50}; the bandwidth of CC1 corresponding to set 1 may be selected from {10, 15, 20, 30, 40, 50, 60, 80}, and the bandwidth of CC2 corresponding to set 1 may also be selected from {10, 15, 20, 30, 40, 50, 60, 80}, i.e., any combination is supported.

For example, the power class information may include at least one of: PC1 (for example, 31 dBm), PC1.5 (for example, 29 dBm), PC2 (for example, 26 dBm), PC3 (for example, 23 dBm), PC4 (to be determined), or PC5 (for example, 20 dBm).

It needs to be noted that those skilled in the art may understand that the methods according to embodiments of the disclosure may be performed separately or in combination with some of the methods in embodiments of the disclosure or some of the methods in the related art.

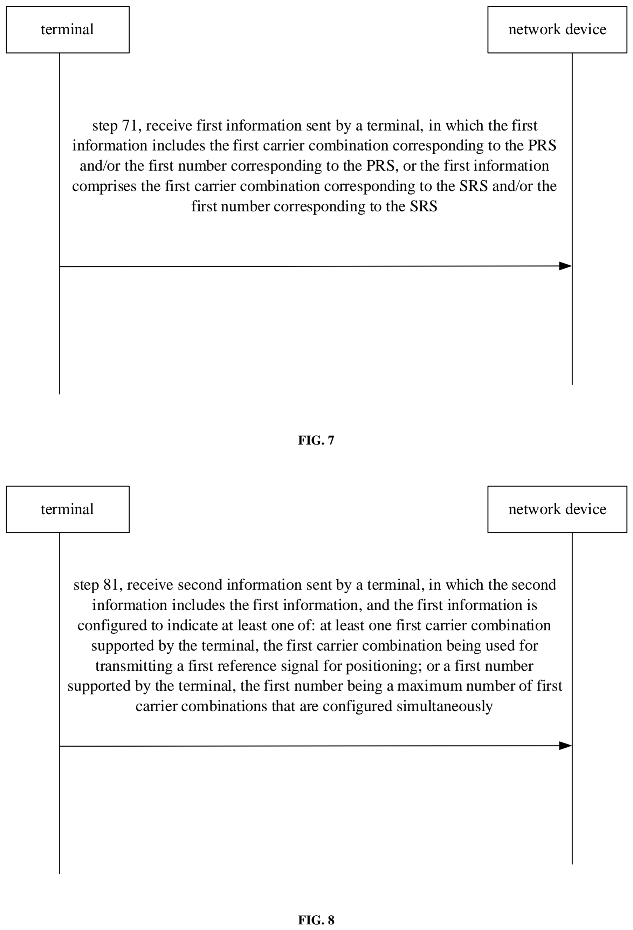

As illustrated in FIG. 7, a method for indicating information according to the embodiments of the disclosure is performed by a network device. The method includes the following.

At step 71, first information sent by a terminal is received, in which the first information includes the first carrier combination corresponding to the PRS and/or the first number corresponding to the PRS, or the first information includes the first carrier combination corresponding to the SRS and/or the first number corresponding to the SRS.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first reference signal includes the PRS and the SRS. The first carrier combination corresponding to the PRS and/or the first number corresponding to the PRS, and the first carrier combination corresponding to the SRS and/or the first number corresponding to the SRS, are sent to the network device separately via the first information.

In an embodiment, the first information sent by the terminal is received, in which the first information is configured to indicate: the at least one first carrier combination supported by the terminal, the first carrier combination being used for transmitting a PRS for positioning. The first information is sent to the network device, in which the first information is configured to indicate at least one of: the at least one first carrier combination supported by the terminal, the first carrier combination being used for transmitting an SRS for positioning.

In an embodiment, the first information sent by the terminal is received, in which the first information is configured to indicate: the at least one first carrier combination supported by the terminal, the first carrier combination being used for transmitting a PRS for positioning; or the first number supported by the terminal, the first number being the maximum number of the first carrier combinations that are configured simultaneously. The first information sent by the terminal is received, in which the first information is configured to indicate: the at least one first carrier combination supported by the terminal, the first carrier combination being used for transmitting an SRS for positioning; or the first number supported by the terminal, the first number being the maximum number of the first carrier combinations that are configured simultaneously. It may be understood that in the above embodiments, the terminal sends the first information twice.

It needs to be noted that those skilled in the art may understand that the methods according to embodiments of the disclosure may be performed separately or in combination with some of the methods in embodiments of the disclosure or some of the methods in the related art.

As illustrated in FIG. 8, a method for indicating information according to the embodiments of the disclosure is performed by a network device. The method includes the following.

At step 81, second information sent by a terminal is received, in which the second information includes the first information; and the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

In an embodiment, the second information sent by the terminal is received, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The first information is included in the second information sent by the terminal to the network device. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, the second information sent by the terminal is received, in which the second information includes the first information. The first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information is configured to indicate at least one of: at least one second carrier combination supported by the terminal, the second carrier combination being used for communication transmission; or a second number supported by the terminal, the second number being a maximum number of the second carrier combinations that are configured simultaneously. The first carrier combination is the same as the second carrier combination, and/or the first number is the same as the second number.

In an embodiment, carriers included in the first carrier combination are intra-band contiguous carriers. If the second information includes the first information, the second carrier combination also needs to include at least one carrier combination that are intra-band contiguous carriers.

It needs to be noted that those skilled in the art may understand that the methods provided in embodiments of the disclosure may be performed separately or in combination with some of the methods in embodiments of the disclosure or some of the methods in the related art.

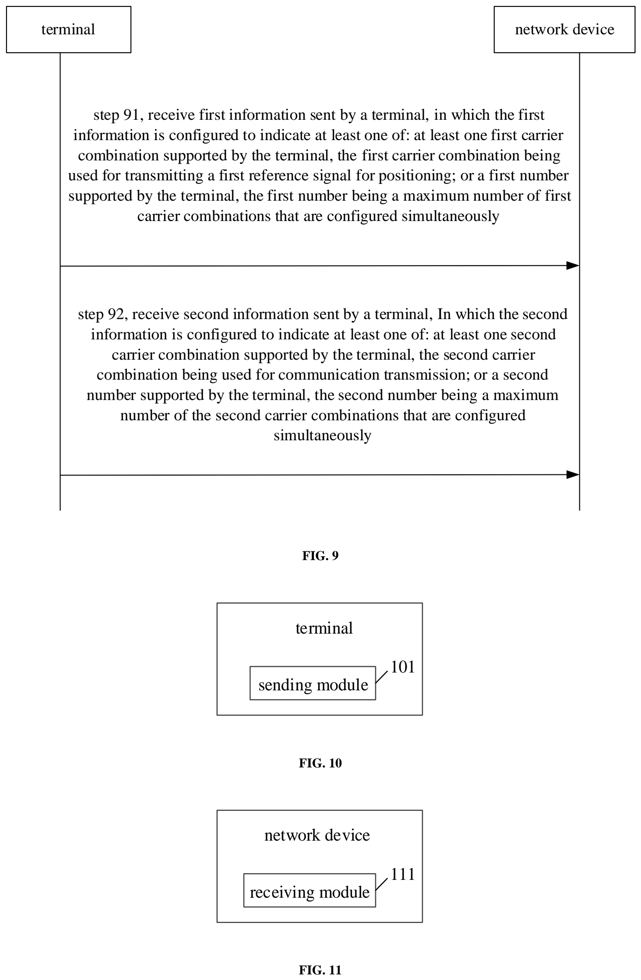

As illustrated in FIG. 9, a method for indicating information according to the embodiments of the disclosure is performed by a network device. The method includes the following.

At step 91, first information sent by a terminal is received, in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

At step 92, second information sent by the terminal is received, in which the second information is configured to indicate at least one of: at least one second carrier combination supported by the terminal, the second carrier combination being used for communication transmission; or a second number supported by the terminal, the second number being a maximum number of the second carrier combinations that are configured simultaneously.

In an embodiment, the first information sent by the terminal is received, in which the first information is configured to indicate at least one of: the at least one first carrier combination supported by the terminal, the first carrier combination being used for transmitting the first reference signal for positioning; or the first number supported by the terminal, the first number being the maximum number of the first carrier combinations that are configured simultaneously. The second information sent by the terminal is received; in which the second information is configured to indicate at least one of: at least one second carrier combination supported by the terminal, the second carrier combination being used for communication transmission; or a second number supported by the terminal, the second number being a maximum number of the second carrier combinations that are configured simultaneously. It may be understood that in the embodiments of the disclosure, the terminal needs to send the first information and the second information. Correspondingly, the first carrier combination and the second carrier combination may be the same or different. The first number and the second number may be the same or different.

It needs to be noted that those skilled in the art may understand that the methods provided in embodiments of the disclosure may be performed separately or in combination with some of the methods in embodiments of the disclosure or some of the methods in the related art.

To better understand the embodiments of the disclosure, the disclosure is further explained below through an example embodiment.

A method for indicating information is provided in the embodiments of the disclosure. The method includes the following.

In an embodiment, a terminal reports first information, in which the first information includes at least one of: a carrier combination supported by the terminal for transmitting a reference signal for positioning (corresponding to the first reference signal in the disclosure), or a maximum number of carrier combinations that are configured simultaneously.

In an embodiment, the reference signal for positioning includes a PRS and an SRS.

In an embodiment, the carrier combination corresponding to the PRS and the carrier combination corresponding to the SRS, and the maximum number of carrier combinations that are configured simultaneously, are reported separately.

In an embodiment, the first information corresponding to the reference signal for positioning is the same as second information corresponding to communication. The second information includes a carrier combination of intra-band contiguous carriers and a maximum number of carrier combinations that are configured simultaneously, the second information is configured to indicate at least one of: a carrier combination supported by the terminal for transmitting a non-positioning reference signal, or a maximum number of carrier combinations that are configured simultaneously.

That is, the plurality of carriers included in each carrier combination are all intra-band contiguous carriers.

That is, a CA capability for PRS is the same as a CA capability for downlink communication, and a CA capability for SRS is the same as a CA capability for uplink communication.

In an embodiment, the first information corresponding to the reference signal for positioning is different from the second information corresponding to communication. The second information is configured to indicate at least one of: a carrier combination supported by the terminal for transmitting a non-positioning reference signal, or a maximum number of carrier combinations that are configured simultaneously.

In an embodiment, the first information includes a carrier combination supported by the terminal for transmitting a reference signal for positioning, and the carrier combination information includes at least one of the following: BandCombination: FreqBandIndicator for indicating the intra-band contiguous CA within which band is supported; or a maximum number of CCs: CA-BandwidthClassNR: a, b, c, g, m (referring to Table 1: since the reference signal for positioning supports a maximum of 3 CCs, it only needs to select from rows a, b, c, g, m);

**Table 1: Illustration of NR CA bandwidth classes**

| **NR CA bandwidth class** | **Aggregated channel bandwidth** | **Number of contiguous CC** | **Fallback group** |
|---|---|---|---|
| A | BW_{Channel} ≤ BW_{Channel,max} | 1 | 1, 2, 3⁴ |
| B | 20 MHz ≤ BW_{Channel_CA} ≤ 100 MHz | 2 | 2, 34 |
| C | 100 MHz < BW_{Channel_CA} ≤ 2 x BW_{Channel, max} | 2 | 1, 3⁴ |
| D | 200 MHz < BW_{Channel_CA} ≤ 3 x BWChannel, max | 3 | |
| E | 300 MHz < BW_{Channel_CA} ≤ 4 x BWChannel, max | 4 | |
| G | 100 MHz < BW_{Channel_CA} ≤ 150 MHz | 3 | 2 |
| H | 150 MHz < BW_{Channel CA} ≤ 200 MHz | 4 | |
| I | 200 MHz < BW_{Channel_CA} ≤ 250 MHz | 5 | |
| J | 250 MHz < BW_{Channel_CA} ≤ 300 MHz | 6 | |
| K | 300 MHz < BW_{Channel CA} ≤ 350 MHz | 7 | |
| L | 350 MHz < BW_{Channel CA} ≤ 400 MHz | 8 | |
| M³ | 50 MHz ≤ BW_{Channel_CA} ≤ 200 MHz | 3 | 3⁴ |
| N³ | 80 MHz ≤ BW_{Channel_CA} ≤ 300 MHz | 4 | |
| O³ | 100 MHz ≤ BW_{Channel_CA} ≤ 400 MHz | 5 | |

**In** an embodiment, if there are a plurality of supported bandwidth combination sets, indicating one or more sets supported by the terminal: bandwidths of different CCs corresponding to different sets are different, for example, referring to the last column of Table 2. The terminal may indicate supported bandwidth combination set(s) and indicate support for one or more sets, and the bandwidths on different CCs corresponding to different sets are different. For example, in the highlighted row below, bandwidths of CC1 and CC2 corresponding to set 0 are {20, 80} or {50, 50}; the bandwidth of CC1 corresponding to set 1 may be selected from {10, 15, 20, 30, 40, 50, 60, 80}, and the bandwidth of CC2 corresponding to set 1 may also be selected from {10, 15, 20, 30, 40, 50, 60, 80}, i.e., any combination is supported.

**Table 2: NR CA configurations and bandwidth combination sets defined for intra-band contiguous CA**

| NR CA configurations or bandwidth combination sets | | | | | | | | |
|---|---|---|---|---|---|---|---|---|
| NR CA configuratio n | Uplink CA configuration s or single uplink carrier⁵ | Channel bandwidths for carrier (MHz) | Channel bandwidths for carrier (MHz) | Channel bandwidths for carrier (MHz) | Channel bandwidths for carrier (MHz) | Channel bandwidths for carrier (MHz) | Maximum aggregated bandwidth (MHz) | Bandwidt h combinati on set |
| CA n40B | - | 20 | 80 | | | | 100 | 0 |
| | | 50 | 50 | | | | | |
| | CA n40B | 10,15, 20, 30, 40, 50, 60, 80 | 10, 15, 20, 30, 40, 50, 60, 80 | | | | 100 | 1 |

The power class information may include at least one of: PC1 (31 dBm), PC1.5 (29 dBm), PC2 (26 dBm), PC3 (23 dBm), PC4 (power value not yet determined), PC5 (20 dBm). Specific details are shown in Table 3 and Table 4:

**Table 3: Illustration of power class corresponding to bandwidth**

| NR bandwidth | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | 26 | +2/-3 | 23 | ±2 |
| n2 | | | | | | | 23 | ±2³ |
| n3 | | | | | 26 | +2/-3³ | 23 | ±2³ |
| n5 | | | | | | | 23 | ±2 |
| n7 | | | | | | | 23 | ±2³ |
| n8 | | | | | | | 23 | ±2³ |
| n12 | | | | | | | 23 | ±2³ |
| n13 | | | | | | | 23 | ±2 |
| n14 | 31⁶ | +2/-3 | | | | | 23 | ±2 |
| n18 | | | | | | | 23 | ±2 |
| n20 | | | | | | | 23 | ±2³ |
| n24 | | | | | | | 23 | +2/-3³ |
| n25 | | | | | | | 23 | ±2³ |
| n26 | | | | | | | 23 | ±2³ |
| n28 | | | | | | | 23 | +2/-2.5 |
| n30 | | | | | | | 23 | ±2 |
| n34 | | | | | 26 | +2/-3 | 23 | ±2 |
| n38 | | | | | | | 23 | ±2 |
| n39 | | | | | 26 | +2/-3 | 23 | ±2 |
| n40 | | | | | 26 | +2/-3 | 23 | ±2 |
| n41 | | | 29⁵ | +2/-33 | 26 | +2/-33 | 23 | ±2³ |
| n47 | | | | | | | 23 | ±2 |
| n48 | | | | | | | 23 | +2/-3 |
| n50 | | | | | | | 23 | ±2 |
| n51 | | | | | | | 23 | ±2 |
| n53 | | | | | | | 23 | ±2 |
| n65 | | | | | | | 23 | ±2 |
| n66 | | | | | | | 23 | ±2 |
| n70 | | | | | | | 23 | ±2 |
| n71 | 31⁶ | +2/-3 | | | | | 23 | +2/-2.5 |
| n74 | | | | | | | 23 | ±2 |
| n77 | | | 29⁵ | +2/-3 | 26 | +2/-3 | 23 | +2/-3 |
| n78 | | | 29⁵ | +2/-3 | 26 | +2/-3 | 23 | +2/-3 |
| n79 | | | 29⁵ | +2/-3 | 26 | +2/-3 | 23 | +2/-3 |
| n80 | | | | | | | 23 | ±2³ |
| n81 | | | | | | | 23 | ±2 |
| n82 | | | | | | | 23 | ±2 |
| n83 | | | | | | | 23 | +2/-2.5 |
| n84 | | | | | | | 23 | ±2 |
| n85 | 31⁶ | +2/-3 | | | | | 23 | ±2³ |
| n86 | | | | | | | 23 | ±2 |
| n89 | | | | | | | 23 | ±2 |
| n91 | | | | | | | 23 | ±2^{3, 4} |
| n92 | | | | | | | 23 | ±2^{3, 4} |
| n93 | | | | | | | 23 | ±2^{3, 4} |
| n94 | | | | | | | 23 | ±2^{3, 4} |
| n95 | | | | | 26 | +2/-3 | 23 | ±2 |
| n97 | | | | | 26 | +2/-3 | 23 | ±2 |
| n98 | | | | | 26 | +2/-3 | 23 | ±2 |
| n99 | | | | | | | 23 | +2/-33 |
| n100 | | | | | | | 23 | ±2 |
| n101 | | | | | | | 23 | ±2 |
| n104 | | | | | 26 | +2/-3 | 23 | +2/-3 |
| n105 | | | | | | | 23 | +2/-2.5 |

**Table 4: Illustration of power class corresponding to bandwidth**

| NR band | Class 1 (dBm) | Tolerance (dB) | Class 2 (dBm) | Tolerance (dB) | Class 3 (dBm) | Tolerance (dB) | Class 5 (dBm) | Tolerance (dB) |
|---|---|---|---|---|---|---|---|---|
| n46 | | | | | | | 20 | +2/-3 |
| n96 | | | | | | | 20 | +2/-3 |
| n102 | | | | | | | 20 | +2/-3 |

In an embodiment, the terminal sends the first information to a base station and/or an LMF.

It needs to be noted that those skilled in the art may understand that the methods provided in embodiments of the disclosure may be performed separately or in combination with some of the methods in embodiments of the disclosure or some of the methods in the related art.

FIG. 10 is a block diagram illustrating a terminal according to an example embodiment of the disclosure. The terminal includes a sending module 101.

The sending module 101 is configured to send first information to a network device, in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

It needs to be noted that those skilled in the art may understand that the methods according to embodiments of the disclosure may be performed separately or in combination with some of the methods in embodiments of the disclosure or some of the methods in the related art.

FIG. 11 is a block diagram illustrating a network device according to an example embodiment of the disclosure. The network device includes a receiving module 111.

The receiving module 111 is configured to receive first information sent by a terminal, in which the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

It needs to be noted that those skilled in the art may understand that the methods according to embodiments of the disclosure may be performed separately or in combination with some of the methods in embodiments of the disclosure or some of the methods in the related art.

A communication system is provided in an embodiment of the disclosure. The communication system includes: a terminal configured to perform any of the methods performed by the terminal as described in the disclosure, and a network device configured to perform any of the methods performed by the access network device as described in the disclosure.

A communication device is provided in an embodiment of the disclosure. The communication device includes: a processor; and a memory storing instructions executable by the processor; in which the processor is configured to execute the executable instructions to implement the method in any embodiment of the disclosure.

The processor may include various types of storage media that are non-transitory computer storage media capable of continuing to memorize information stored thereon after the communication device is powered down.

The processor may be connected to the memory through a bus or the like for reading an executable program stored on the memory.

A computer storage medium is further provided in an embodiment of the disclosure. The computer storage medium stores a computer-executable program which, when executed by a processor, implements the method in any embodiment of the disclosure.

Regarding the device in the above embodiments, the specific manner in which each module performs an operation has been described in detail in the embodiments relating to the method, which will not be described in detail here.

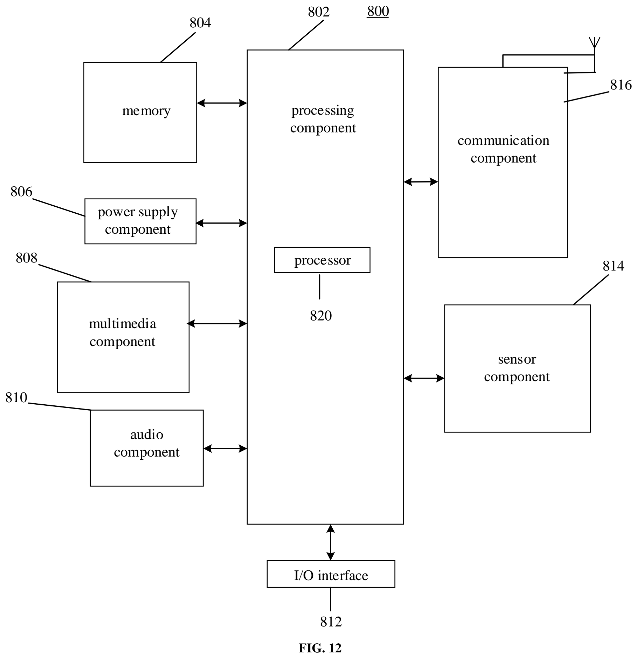

As illustrated in FIG. 12, a structure of a terminal is provided in an embodiment of the disclosure.

Referring to FIG. 12, an embodiment of the disclosure provides a terminal 800. The terminal 800 may specifically be a mobile phone, a computer, a digital broadcasting terminal, a message transceiver device, a gaming console, a tablet device, a medical device, a fitness device, a personal digital assistant, etc.

As illustrated in FIG. 10, the terminal 800 may include one or more of the following components: a processing component 802, a memory 804, a power supply component 806, a multimedia component 808, an audio component 810, an input/output interface (I/O) 812, a sensor component 814, and a communication component 816.

The processing component 802 generally controls the overall operations of the terminal 800, such as operations associated with displays, telephone calls, data communications, camera operations, and recording operations. The processing component 802 may include one or more processors 820 to execute instructions to accomplish all or some of the steps of the method described above. Alternatively, the processing component 802 may include one or more modules to facilitate interactions between the processing component 802 and other components. For example, the processing component 802 may include a multimedia module to facilitate interactions between the multimedia component 808 and the processing component 802.

The memory 804 is configured to store various types of data to support operation at the terminal 800. Examples of such data include instructions for any application or method operated on the terminal 800, contact data, phone book data, messages, pictures, videos, etc. The memory 804 may be implemented by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD-ROM.

The power supply component 806 provides power to the various components of the terminal 800. The power supply component 806 may include a power management system, one or more power supplies, and other components associated with generating, managing, and distributing power for the terminal 800.

The multimedia component 808 includes a screen providing an output interface between the terminal 800 and a user. In some embodiments, the screen may include a liquid crystal display (LCD) and a touch panel (TP). In the case that the screen includes a touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also detect a duration and pressure associated with the touch or swipe operation. In some embodiments, the multimedia component 808 includes a front-facing camera and/or a rear-facing camera. The front camera and/or the rear camera may receive external multimedia data when the terminal 800 is in an operating mode, such as a shooting mode or a video mode. Each of the front camera and the rear camera may be a fixed optical lens system or has a focal length and optical zoom capability.

The audio component 810 is configured to output and/or input audio signals. For example, the audio component 810 includes a microphone (MIC) that is configured to receive external audio signals when the terminal 800 is in an operating mode, such as a call mode, a recording mode, and a voice recognition mode. The received audio signals may be further stored in the memory 804 or sent in the communication component 816. In some embodiments, the audio component 810 further includes a speaker for outputting audio signals.

The I/O interface 812 provides an interface between the processing component 802 and a peripheral interface module, said peripheral interface module may be a keypad, a click wheel, buttons, etc. These buttons may include, but are not limited to: a home button, a volume button, a start button, and a lock button.

The sensor component 814 includes one or more sensors for providing various aspects of status assessment for the terminal 800. For example, the sensor component 814 may detect an open/closed state of the terminal 800, the relative positioning of components (such as the display and keypad of the terminal 800), the sensor component 814 may also detect a change in the position of the terminal 800 or a component of the terminal 800, a presence or absence of user contact with the terminal 800, an orientation of the terminal 800 or an acceleration/deceleration of the terminal 800, and a temperature change of the terminal 800. The sensor component 814 may include a proximity sensor configured to detect the presence of a nearby object in the absence of any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate communication between the terminal 800 and other devices by wired or wireless means. The terminal 800 may access a wireless network based on a communication standard, such as Wi-Fi, 4G or 5G, or their combination. In an example embodiment, the communication component 816 receives broadcast signals or broadcast-related information from an external broadcast management system in a broadcast channel. In an example embodiment, the communication component 816 further includes a near field communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In example embodiments, the terminal 800 may be implemented by one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components for performing the methods described above.

In example embodiments, there is also provided a non-transitory computer-readable storage medium including instructions, such as a memory 804 including instructions, the instructions being executable by a processor 820 of the terminal 800 for accomplishing the above-described method. For example, the non-transitory computer-readable storage medium may be a ROM, a random access memory (RAM), a CD-ROM, a magnetic tape, floppy disks, and optical data storage devices, etc.

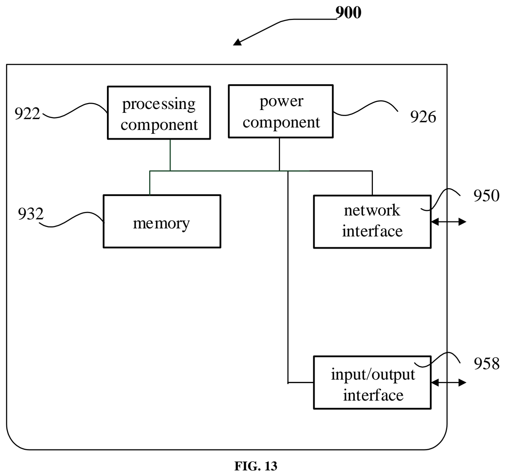

Referring to FIG. 13, an embodiment of the disclosure shows a structure of a base station. For example, the base station 900 may be provided as a network side device. Referring to FIG. 13, the base station 900 includes a processing component 922, which further includes one or more processors, and a memory resource represented by a memory 932 for storing instructions that may be executed by the processing component 922, such as an application program. The application program stored in memory 932 may include one or more modules each corresponding to a set of instructions. Alternatively, the processing component 922 is configured to execute the instructions to perform any of the methods applied to the base station as described in the foregoing method.

The base station 900 may also include a power component 926 configured to perform power management of the base station 900, a wired or wireless network interface 950 configured to connect the base station 900 to a network, and an input/output (I/O) interface 958. The base station 900 may operate an operating system based on the operating system stored in the memory 932, such as Windows Server ^{™}, Mac OS X^{™}, Unix^{™}, Linux^{™}, FreeBSD^{™}, or the like.

Those skilled in the art will be aware of other implementations of the disclosure after considering the specification and practicing the disclosure disclosed herein. The disclosure is intended to cover any variations, uses, or adaptive changes of the disclosure, which follow the general principles of the disclosure and include common knowledge or conventional technical means in the technical field not disclosed herein. The description and the embodiments are to be regarded as illustrative, and the true scope and spirit of the disclosure are indicated in the following claims.

It should be understood that the disclosure is not limited to the precise structures described above and illustrated in the accompanying drawings, and that various modifications and changes may be made without departing from its scope. The scope of the disclosure is limited only by the appended claims.

## Claims

1. A method for indicating information, performed by a terminal, comprising:
sending first information to a network device;
wherein the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

2. The method of claim 1, wherein the first reference signal comprises at least one of:
a positioning reference signal (PRS); or
a sounding reference signal (SRS).

3. The method of claim 2, wherein the first information comprises the first carrier combination corresponding to the PRS and/or the first number corresponding to the PRS, or the first information comprises the first carrier combination corresponding to the SRS and/or the first number corresponding to the SRS.

4. The method of claim 1, further comprising:
sending second information to the network device, wherein the second information comprises the first information.

5. The method of claim 4, wherein the second information is configured to indicate at least one of:
at least one second carrier combination supported by the terminal, the second carrier combination being used for communication transmission; or
a second number supported by the terminal, the second number being a maximum number of the second carrier combinations that are configured simultaneously;
wherein the first carrier combination is the same as the second carrier combination, and/or the first number is the same as the second number.

6. The method of claim 5, wherein carriers comprised in the first carrier combination are intra-band contiguous carriers.

7. The method of claim 1, wherein information about a carrier combination comprised in the first information comprises at least one of:
information for indicating intra-band contiguous carriers supporting carrier aggregation (CA);
a maximum number of component carriers (CCs) supporting the CA of the terminal;
at least one bandwidth combination set supported by the terminal, wherein bandwidths on at least one CC corresponding to different bandwidth combination sets are different; or
power class (PC) information.

8. The method of any one of claims 1 to 7, wherein the network device comprises an access network device and/or a core network device.

9. A method for indicating information, performed by a network device, comprising:
receiving first information sent by a terminal;
wherein the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

10. The method of claim 9, wherein the first reference signal comprises at least one of:
a positioning reference signal (PRS); or
a sounding reference signal (SRS).

11. The method of claim 10, wherein the first information comprises the first carrier combination corresponding to the PRS and/or the first number corresponding to the PRS, or the first information comprises the first carrier combination corresponding to the SRS and/or the first number corresponding to the SRS.

12. The method of claim 9, further comprising:
receiving second information sent by the terminal, wherein the second information comprises the first information.

13. The method of claim 12, wherein the second information is configured to indicate at least one of:
at least one second carrier combination supported by the terminal, the second carrier combination being used for communication transmission; or a second number supported by the terminal, the second number being a maximum number of the second carrier combinations that are configured simultaneously;
wherein the first carrier combination is the same as the second carrier combination, and/or the first number is the same as the second number.

14. The method of claim 13, wherein carriers comprised in the first carrier combination are intra-band contiguous carriers.

15. The method of claim 9, wherein information about a carrier combination comprised in the first information comprises at least one of:
information for indicating intra-band contiguous carriers supporting carrier aggregation (CA);
a maximum number of component carriers (CCs) supporting the CA of the terminal;
at least one bandwidth combination set supported by the terminal, wherein bandwidths on at least one CC corresponding to different bandwidth combination sets are different; or
power class (PC) information.

16. The method of any one of claims 9 to 16, wherein the network device comprises an access network device and/or a core network device.

17. A terminal, comprising:
a sending module, configured to send first information to a network device;
wherein the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

18. A network device, comprising:
a receiving module, configured to receive first information sent by a terminal;
wherein the first information is configured to indicate at least one of: at least one first carrier combination supported by the terminal, the first carrier combination being used for transmitting a first reference signal for positioning; or a first number supported by the terminal, the first number being a maximum number of first carrier combinations that are configured simultaneously.

19. A communication system, comprising:
a terminal, configured to implement the method of any one of claims 1 to 7; and
a network device, configured to implement the method of any one of claims 9 to 16.

20. A communication device, comprising:
one or more processors;
wherein the one or more processors are configured to invoke instructions to cause the communication device to perform the method of any one of claims 1 to 8 or claims 9 to 16.

21. A storage medium storing instructions, wherein when the instructions are executed on a communication device, the communication device is caused to perform the method of any one of claims 1 to 8 or claims 9 to 16.
